# EUROPEAN PATENT APPLICATION

(11) **EP 2 710 894 A1**
(43) Date of publication of application: **26.03.2014**
(21) Application number: 12790326.8
(22) Date of filing: 18.05.2012
(51) Int. Cl.: A01N 43/56, A01N 43/653, A01P 21/00

(54) **COMPOSITION FOR ELIMINATING DECAYED FOLIAGE FROM CROPS**

(30) Priority: 20.05.2011 JP 2011113250
(71) Applicant: Nihon Nohyaku Co., Ltd., Tokyo 104-8386 (JP)
(72) Inventor: TOKUBUCHI, Nao, Tokyo 104-8386 (JP)
(74) Representative: Kalhammer, Georg
(86) International application number: PCT/JP2012/062760
(87) International publication number: WO 2012/161114

(57) **Abstract**

Provided is a safer and higher-performance desiccant and defoliant composition. The disclosed desiccant and defoliant composition comprises two or more different kinds selected from the group consisting of protoporphyrinogen oxidase-inhibiting herbicides as active ingredients.

## Description

### TECHNICAL FIELD

The present invention relates to a desiccant and defoliant composition for foliar treatment that facilitates harvest of crop plants such as potato, sunflower, soybean, rape and sorghum and inhibits the development of diseases in such crop plants during the harvest season.

### BACKGROUND ART

To facilitate harvesting operation of crops such as potato, sunflower, soybean, rape and sorghum, desiccant and defoliant compositions serving to wither the aboveground parts of such crop plants are used. With the use of such desiccant and defoliant compositions, harvesting procedures become easy, particularly in the case of mechanical harvesting, and the development of diseases can be inhibited because the aboveground parts of crop plants wither. In the case of crops such as sunflower, harvested crops need to be dried before oil extraction, and preharvest application of desiccant and defoliant compositions to crop plants is beneficial because it reduces the moisture content of the seeds and thus can reduce the cost of drying prior to oil extraction. Thus, it is advantageous in various ways to wither the aboveground parts of crop plants before harvest and agrochemicals such as diquat, pyraflufen-ethyl and carfentrazone described in Non Patent Literature shown below are used in this field.

### CITATION LIST

### Non Patent Literature

Non Patent Literature 1: Nohyaku Handbook (Agrochemicals Handbook), 2005 edition, Japan Plant Protection Association

### SUMMARY OF INVENTION

### TECHNICAL PROBLEM

However, conventional agrochemicals have disadvantages including a high environmental impact attributed to high dosages, a prolonged time required to wither plants, and an unsatisfactory desiccation and defoliation effect. Therefore, the creation of desiccant and defoliant compositions with higher performance is desired.

### SOLUTION TO PROBLEM

The present inventor conducted extensive search for desiccant and defoliant compositions to solve the above-mentioned problems. As a result, the present inventor found that use of a mixture of two or more kinds of compounds selected from protoporphyrinogen oxidase-inhibiting herbicides as active ingredients produces a synergistic effect and thus exhibits a sufficient desiccation and defoliation effect even though the dosages of the compounds used are lower than the respective standard dosages, and completed the present invention.

That is, the present invention relates to the following.
[1] A desiccant and defoliant composition comprising two or more different kinds selected from the group consisting of protoporphyrinogen oxidase-inhibiting herbicides as active ingredients.
[2] The desiccant and defoliant composition according to the above [1], at least comprising pyraflufen-ethyl or an agriculturally acceptable salt or ester thereof as a first active ingredient; and one or more kinds of compounds selected from the group consisting of carfentrazone, sulfentrazone, flumioxazin, fomesafen, acifluorfen, oxyfluorfen, fluthiacet-methyl, butafenacil, saflufenacil and agriculturally acceptable salts or esters thereof as a second active ingredient.
[3] The desiccant and defoliant composition according to the above [1], at least comprising carfentrazone or an agriculturally acceptable salt or ester thereof as a first active ingredient; and one or more kinds of compounds selected from the group consisting of sulfentrazone, flumioxazin, fomesafen, acifluorfen, oxyfluorfen, fluthiacet-methyl, butafenacil, saflufenacil and agriculturally acceptable salts or esters thereof as a second active ingredient.
[4] The desiccant and defoliant composition according to the above [1], at least comprising sulfentrazone or an agriculturally acceptable salt or ester thereof as a first active ingredient; and one or more kinds of compounds selected from the group consisting of flumioxazin, fomesafen, acifluorfen, oxyfluorfen, fluthiacet-methyl, butafenacil, saflufenacil and agriculturally acceptable salts or esters thereof as a second active ingredient.
[5] The desiccant and defoliant composition according to the above [1] or [2], comprising pyraflufen-ethyl and carfentrazone as active ingredients.
[6] A method for using the desiccant and defoliant composition according to any one of the above [1] to [5] for desiccation and/or defoliation of crop foliage.
[7] A method for using the desiccant and defoliant composition according to any one of the above [1] to [5], comprising applying the composition to potato, sunflower, soybean, rape, sorghum or cotton.
[8] A method for using the composition according to any one of the above [1] to [5] as a herbicide.
[9] The method according to the above [8], wherein the composition is applied to cereals.

### ADVANTAGEOUS EFFECTS OF INVENTION

The desiccant and defoliant composition of the present invention uses synergistic effect of the active ingredients and thereby can exert the desired effect even though their dosages are lower than the respective conventional dosages in a separate use, and thus can reduce the environmental impact of agrochemicals.

### DESCRIPTION OF EMBODIMENTS

The agrochemicals used for the desiccant and defoliant composition of the present invention are protoporphyrinogen oxidase-inhibiting herbicides, and the examples include acifluorfen, aclonifen, bifenox, chlomethoxyfen, chlornitrofen, ethoxyfen, fluorodifen, fluoroglycofen, fluoronitrofen, fomesafen, furyloxyfen, halosafen, lactofen, nitrofen, nitrofluorfen, oxyfluorfen, cinidon, flumiclorac, flumioxazin, profluazol, pyrazogyl, oxadiargyl, oxadiazon, pentoxazone, fluazolate, benzfendizone, butafenacil, fluthiacet-methyl, thidiazimin, azafenidin, carfentrazone, sulfentrazone, flufenpyr, pyraflufen-ethyl and saflufenacil, and agrochemically acceptable salts and esters thereof. Also included are known compounds described in Nohyaku Handbook (Agrochemicals Handbook), 2005 edition (Japan Plant Protection Association), SHIBUYA INDEX 2009 (SHIBUYA INDEX Research Group), etc. Among the protoporphyrinogen oxidase-inhibiting herbicides used for the desiccant and defoliant composition of the present invention, preferred are pyraflufen-ethyl, carfentrazone, sulfentrazone, flumioxazin, fomesafen, acifluorfen, oxyfluorfen, fluthiacet-methyl, butafenacil, saflufenacil, agrochemically acceptable salts or esters thereof, etc.

Exemplary combinations of the protoporphyrinogen oxidase-inhibiting herbicides include pyraflufen-ethyl and acifluorfen; pyraflufen-ethyl and aclonifen; pyraflufen-ethyl and bifenox; pyraflufen-ethyl and chlomethoxyfen; pyraflufen-ethyl and chlornitrofen; pyraflufen-ethyl and ethoxyfen; pyraflufen-ethyl and fluorodifen; pyraflufen-ethyl and fluoroglycofen; pyraflufen-ethyl and fluoronitrofen; pyraflufen-ethyl and fomesafen; pyraflufen-ethyl and furyloxyfen; pyraflufen-ethyl and halosafen; pyraflufen-ethyl and lactofen; pyraflufen-ethyl and nitrofen; pyraflufen-ethyl and nitrofluorfen; pyraflufen-ethyl and oxyfluorfen; pyraflufen-ethyl and cinidon; pyraflufen-ethyl and flumiclorac; pyraflufen-ethyl and flumioxazin; pyraflufen-ethyl and profluazol; pyraflufen-ethyl and pyrazogyl; pyraflufen-ethyl and oxadiargyl; pyraflufen-ethyl and oxadiazon; pyraflufen-ethyl and pentoxazone; pyraflufen-ethyl and fluazolate; pyraflufen-ethyl and benzfendizone; pyraflufen-ethyl and butafenacil; pyraflufen-ethyl and fluthiacet-methyl; pyraflufen-ethyl and thidiazimin; pyraflufen-ethyl and azafenidin; pyraflufen-ethyl and carfentrazone; pyraflufen-ethyl and sulfentrazone; pyraflufen-ethyl and flufenpyr; pyraflufen-ethyl and saflufenacil; carfentrazone and acifluorfen; carfentrazone and aclonifen; carfentrazone and bifenox; carfentrazone and chlomethoxyfen; carfentrazone and chlornitrofen; carfentrazone and ethoxyfen; carfentrazone and fluorodifen; carfentrazone and fluoroglycofen; carfentrazone and fluoronitrofen; carfentrazone and fomesafen; carfentrazone and furyloxyfen; carfentrazone and halosafen; carfentrazone and lactofen; carfentrazone and nitrofen; carfentrazone and nitrofluorfen; carfentrazone and oxyfluorfen; carfentrazone and cinidon; carfentrazone and flumiclorac; carfentrazone and flumioxazin; carfentrazone and profluazol; carfentrazone and pyrazogyl; carfentrazone and oxadiargyl; carfentrazone and oxadiazon; carfentrazone and pentoxazone; carfentrazone and fluazolate; carfentrazone and benzfendizone; carfentrazone and butafenacil; carfentrazone and fluthiacet-methyl; carfentrazone and thidiazimin; carfentrazone and azafenidin; carfentrazone and sulfentrazone; carfentrazone and flufenpyr; carfentrazone and saflufenacil; sulfentrazone and acifluorfen; sulfentrazone and aclonifen; sulfentrazone and bifenox; sulfentrazone and chlomethoxyfen; sulfentrazone and chlornitrofen; sulfentrazone and ethoxyfen; sulfentrazone and fluorodifen; sulfentrazone and fluoroglycofen; sulfentrazone and fluoronitrofen; sulfentrazone and fomesafen; sulfentrazone and furyloxyfen; sulfentrazone and halosafen; sulfentrazone and lactofen; sulfentrazone and nitrofen; sulfentrazone and nitrofluorfen; sulfentrazone and oxyfluorfen; sulfentrazone and cinidon; sulfentrazone and flumiclorac; sulfentrazone and flumioxazin; sulfentrazone and profluazol; sulfentrazone and pyrazogyl; sulfentrazone and oxadiargyl; sulfentrazone and oxadiazon; sulfentrazone and pentoxazone; sulfentrazone and fluazolate; sulfentrazone and benzfendizone; sulfentrazone and butafenacil; sulfentrazone and fluthiacet-methyl; sulfentrazone and thidiazimin; sulfentrazone and azafenidin; sulfentrazone and flufenpyr; and sulfentrazone and saflufenacil.

Preferable examples include pyraflufen-ethyl and carfentrazone; pyraflufen-ethyl and sulfentrazone; pyraflufen-ethyl and flumioxazin; pyraflufen-ethyl and fomesafen; pyraflufen-ethyl and acifluorfen; pyraflufen-ethyl and oxyfluorfen; pyraflufen-ethyl and fluthiacet-methyl; pyraflufen-ethyl and butafenacil; pyraflufen-ethyl and saflufenacil; carfentrazone and sulfentrazone; carfentrazone and flumioxazin; carfentrazone and fomesafen; carfentrazone and acifluorfen; carfentrazone and oxyfluorfen; carfentrazone and fluthiacet-methyl; carfentrazone and butafenacil; carfentrazone and saflufenacil; sulfentrazone and flumioxazin; sulfentrazone and fomesafen; sulfentrazone and acifluorfen; sulfentrazone and oxyfluorfen; sulfentrazone and fluthiacet-methyl; sulfentrazone and butafenacil; and sulfentrazone and saflufenacil.

The total content of the active ingredient compounds in the desiccant and defoliant composition of the present invention can be adjusted as needed, and for example, is appropriately selected from the range of about 0.01 to 90 parts by mass, and preferably about 0.1 to 50 parts by mass in 100 parts by mass of the desiccant and defoliant composition.

The application amount of the desiccant and defoliant composition of the present invention may vary with various factors, for example, the growing conditions of crops, the weather, the environmental conditions, the dosage form, the application method, the application site, the application time, etc., but for example, the total application amount of the active ingredient compounds per 10 ares is appropriately selected from the range of about 0.001 g to 10 kg, and preferably about 0.005 g to 1 kg.

The blending ratio of the active compounds used in combination in the desiccant and defoliant composition of the present invention is appropriately determined depending on the kinds of compounds, the dosage form, etc. Usually, the ratio (mass ratio) of the second active ingredient to the first active ingredient can be in the range of about 1 to 200.

The application time of the desiccant and defoliant composition of the present invention may vary to some extent with the weather conditions and the growing conditions of crops, but is generally the time when the vegetative growth of crop plants to be treated ends and the maturation stage is about to begin.

Specifically, the desiccant and defoliant composition is used as follows.

In the case of potato, the desiccant and defoliant composition of the present invention is desirably applied between the beginning of leaf yellowing and 3 days before harvest, and more desirably between 21 days and 3 days before harvest. In the case of cotton, the application is desirably performed when the plants mature and the calyxes turn yellow; and based on the moisture content, when the moisture content of the seeds reaches 20 to 50% by weight. In other words, the application is performed at the cotton boll opening stage (the period from the beginning to the end of boll opening in the cotton field as a whole). Too early application of the desiccant and defoliant composition reduces the yield, and too late application results in cotton boll rot and reduced effect of the desiccant and defoliant composition due to low temperature. Desirably, the desiccant and defoliant composition of the present invention is applied when 20 to 85% of the cotton bolls in the entire cotton field open. In the case of soybean, the desiccant and defoliant composition of the present invention is desirably applied between the time when the plants mature and the leaves begin to turn brown and one week before harvest. In the case of rape, the application is desirably performed when the color of the seeds begins to change from green into brown.

The desiccant and defoliant composition of the present invention may be used as it is without additional ingredient, but in general, the composition is preferably used as a formulation convenient for application, which is prepared in the usual manner for agrochemical formulations. That is, the active ingredients and an appropriate inactive carrier, and if needed an adjuvant, are blended in an appropriate ratio, and through the step of dissolution, separation, suspension, mixing, impregnation, adsorption and/or adhesion, are formulated into an appropriate form for application, such as a suspension concentrate, an emulsifiable concentrate, a soluble concentrate, a wettable powder, a water-dispersible granule, a granule, a dust, a tablet and a pack.

The inactive carrier that can be used in the present invention may be a solid or liquid carrier. Exemplary materials as the solid carrier include soybean powder, grain powder, wood flour, bark powder, sawdust, tobacco stalk powder, walnut shell flour, wheat bran, cellulose powder, extraction residue of plants, synthetic polymers such as pulverized synthetic resin, clays (for example, kaolin, bentonite, acid clay, etc.), talcs (for example, talc, pyrophyllite, etc.), silicas {for example, diatomite, silica sand, mica and white carbon (i.e., synthetic high-dispersion silicic acid, also called fine hydrous silica powder or hydrous silicic acid, of which some commercial products contain calcium silicate as a major component)}, active carbon, sulfur powder, pumice, calcined diatomite, pulverized brick, fly ash, sand, calcium carbonate, powders of inorganic minerals such as calcium phosphate, plastic carriers such as polyethylene, polypropylene and polyvinylidene chloride, chemical fertilizers such as ammonium sulfate, ammonium phosphate, ammonium nitrate, urea and ammonium chloride, and manure. These can be used alone or as a mixture of two or more kinds.

The liquid carrier can be selected from materials which can serve as a solvent themselves, and materials which cannot serve as a solvent themselves but can disperse active ingredient compounds with the help of an adjuvant. Typical examples of the liquid carrier include water, alcohols (for example, methanol, ethanol, isopropanol, butanol, ethylene glycol, etc.), ketones (for example, acetone, methyl ethyl ketone, methyl isobutyl ketone, diisobutyl ketone, cyclohexanone, etc.), ethers (for example, ethyl ether, dioxane, cellosolve, dipropyl ether, tetrahydrofuran, etc.), aliphatic hydrocarbons (for example, kerosene, mineral oil, etc.), aromatic hydrocarbons (for example, benzene, toluene, xylene, solvent naphtha, alkyl naphthalene, etc.), halogenated hydrocarbons (for example, dichloroethane, chloroform, carbon tetrachloride, chlorinated benzene, etc.), esters (for example, ethyl acetate, diisopropyl phthalate, dibutyl phthalate, dioctyl phthalate, etc.), amides (for example, dimethylformamide, diethylformamide, dimethylacetamide, etc.), nitriles (for example, acetonitrile etc.) and dimethyl sulfoxides. These can be used alone or as a mixture of two or more kinds.

Examples of the adjuvant include surfactants; dispersion-stabilizers, tackifiers and/or binders; glidants; deflocculants; defoamants; and preservatives as listed below. These adjuvants can be used depending on the purpose. The adjuvants may be used alone or in a combination of two or more kinds, but in some cases, it is possible that no adjuvants are used.

The surfactants can be used for emulsification, dispersion, solubilization and/or wetting of active ingredient compounds. The examples include polyoxyethylene alkyl ether, polyoxyethylene alkyl aryl ether, polyoxyethylene higher fatty acid ester, polyoxyethylene resin acid ester, polyoxyethylene sorbitan monolaurate, polyoxyethylene sorbitan monooleate, alkylaryl sulfonates, naphthalene sulfonate condensates, lignosulfonates and higher alcohol sulfates.

The dispersion-stabilizers, tackifiers and/or binders can be used for dispersion-stabilization of the active ingredient compounds and for helping granulation as a tackifier and/or a binder. The examples include casein, gelatin, starch, methyl cellulose, carboxymethyl cellulose, gum arabic, polyvinyl alcohol, wood turpentine oil, rice-bran oil, bentonite and lignosulfonates.

The glidants can be used for improvement in the flowability of solid products, and the examples include waxes, stearates and alkyl phosphates. The deflocculants can be used as a deflocculant for suspension products, and the examples include naphthalene sulfonate condensates and condensed phosphates. Examples of the defoamants include silicone oil. Examples of the preservatives include 1,2-benzisothiazolin-3-one, parachlorometaxylenol and butyl parahydroxybenzoate.

Further, the desiccant and defoliant composition of the present invention can optionally contain other additives including functional spreading agents, activity enhancers such as metabolic inhibitors (piperonyl butoxide etc.), antifreezing agents (propylene glycol etc.), antioxidants (BHT (dibutylhydroxytoluene) etc.) and ultraviolet absorbers.

The desiccant and defoliant composition of the present invention may be used as it is, or after appropriately diluted or suspended in water etc. The compounds used in the desiccant and defoliant composition of the present invention are commercially available, and treatment with a mixture of their commercial products can also produce the same effect.

The desiccant and defoliant composition of the present invention can be used as a mixture with another weed control agent, and such a combined use may exert an enhanced weed control effect. Further, the desiccant and defoliant composition of the present invention can be used as a mixture with or in combination with an insecticide, a miticide, a nematicide, a microbicide, a plant growth regulator, a fertilizer, a soil conditioner or the like unless the combination of the agrochemicals used hinders the effect of the present invention.

Specific examples of the additional weed control agents include atrazine, cyanazine, dimethametryn, metribuzin, prometryn, simazine, simetryn, chlorotoluron, diuron, fluometuron, isoproturon, linuron, methabenzthiazuron, propanil, bentazone, bromoxynil, ioxynil, pyridate, butamifos, dithiopyr, ethalfluralin, pendimethalin, thiazopyr, trifluralin, acetochlor, alachlor, butachlor, diethatyl-ethyl, dimethenamid, fluthiamide, mefenacet, metolachlor, pretilachlor, propachlor, cinmethylin, acifluorfen, acifluorfen-sodium, benzfendizone, bifenox, butafenacil, chlomethoxynil, fomesafen, lactofen, oxadiazon, oxadiargyl, oxyfluorfen, carfentrazone-ethyl, fluazolate, flumiclorac-pentyl, fluthiacet-methyl, isopropazol, sulfentrazone, thidiazimin, azafenidin, pyraflufen-ethyl, cinidon-ethyl, difenzoquat, diquat, paraquat, 2,4-D, 2,4-DB, clopyralid, dicamba, fluroxypyr, MCPA, MCPB, mecoprop, quinclorac, triclopyr, azimsulfuron, bensulfuron-methyl, chlorimuron-ethyl, chlorsulfuron, cloransulam-methyl, cyclosulfamuron, diclosulam, ethoxysulfuron, flazasulfuron, flucarbazone, flumetsulam, flupyrsulfuron, halosulfuron-methyl, imazosulfuron, iodosulfuron, metosulam, metsulfuron-methyl, nicosulfuron, oxasulfuron, primisulfuron-methyl, procarbazone-sodium, prosulfuron, pyrazosulfuron-ethyl, rimsulfuron, sulfometuron-methyl, sulfosulfuron, triasulfuron, tribenuron-methyl, tritosulfuron, thifensulfuron-methyl, triflusulfuron-methyl, pyribenzoxim, bispyribac-sodium, pyriminobac-methyl, pyrithiobac-sodium, imazameth, imazamethabenz-methyl, imazamox, imazapic, imazapyr, imazaquin, imazethapyr, tepraloxydim, alloxydim-sodium, clethodim, clodinafop-propargyl, cyhalofop-butyl, diclofop-methyl, fenoxaprop-ethyl, fenoxaprop-p-ethyl, fluazifop-buthyl, fluazifop-p-butyl, haloxyfop-methyl, quizalofop-p-ethyl, sethoxydim, tralkoxydim, diflufenican, flurtamone, norflurazone, benzofenap, isoxaflutole, pyrazolate, pyrazoxyfen, sulcotrione, clomazone, mesotrione, isoxachlortole, bialaphos, glufosinate-ammonium, glyphosate, sulfosate, dichlobenil, isoxaben, benthiocarb, butylate, dimepiperate, EPTC, esprocarb, molinate, pyributicarb, triallate, diflufenzopyr, bromobutide, DSMA, MSMA, cafenstrol, daimuron, epoprodan, flupoxam, metobenzuron, pentoxazone, piperophos, triaziflam, beflubutamid, benzobicyclon, clomeprop, fentrazamide, flufenacet, florasulam, indanofan, isoxadifen, mesotrione, naploanilide, oxaziclomefone, pethoxyamid, phenothiol and pyridafol.

The above-mentioned compounds are described in Farm Chemicals Handbook, 1995 (Meister Publishing Company); AG CHEM NEW COMPOUND REVIEW, VOL. 13, 1995 (AG CHEM INFORMATION SERVICE); AG CHEM NEW COMPOUND REVIEW, VOL. 15, 1997 (AG CHEM INFORMATION SERVICE) ; AG CHEM NEW COMPOUND REVIEW, VOL. 16, 1998 (AG CHEM INFORMATION SERVICE); AGROW, No. 296, p. 22; AGROW, No. 297, p. 21; AGROW, No. 308, p. 22; AGROW, No. 324, pp. 26-27; Josou-zai Kenkyu Souran (The Complete Guide to Herbicides) (Hakubunkan Shinsha Publishers, Ltd.); and the like.

Examples of the crops for which the desiccant and defoliant composition of the present invention can be used include various genera of cultivated dicotyledonous plants, such as cotton (*Gossypium*), soybean (*Glycine*), Swiss chard and sugar beat (Beta), carrot (*Daucus*), kidney bean and Aoimada (*Phaseolus*), pea (*Pisum*)*,* eggplant and potato (*Solanum*)*,* flax (*Linum*)*,* sweet potato and morning glory (*Ipomoea*), broad bean and Nantenhagi (Vicia), tobacco (Nicotiana), tomato (*Lycopersicon*)*,* peanut (*Arachis*), rape, Chinese cabbage, turnip, cabbage and rapeseed (*Brassica*), Akinonogeshi (Lactuca), cucumber and melon (*Cucumis*), pumpkin (*Cucurbita*) and sunflower (*Helianthus*).

Also included are various genera of cultivated monocotyledonous plants, such as rice (Oryza), corn and hop corn (Zea), wheat (*Triticum*)*,* barley (*Hordeum*)*,* oats and oat (*Avena*)*,* rye (*Secale*)*,* sorghum (Sorghum), millet (*Panicum*)*,* sugar cane and Waseobana (*Saccharum*)*,* pineapple (Ananas), asparagus (*Asparagus*)*,* green onion and leek (*Allium*)*,* alfalfa (*Medicago*) and sorghum (*Sorghum*).

The crops for which the desiccant and defoliant composition of the present invention is used also include crops provided with herbicide tolerance by a classical breeding technique or a gene recombination technique. Examples of such herbicide tolerance include tolerance to HPPD inhibitors, such as isoxaflutole; ALS inhibitors, such as imazethapyr and thifensulfuron-methyl; EPSP synthase inhibitors, such as glyphosate; glutamine synthetase inhibitors, such as glufosinate; acetyl-CoA carboxylase inhibitors, such as sethoxydim; PPO inhibitors, such as flumioxazin; or other herbicides, such as bromoxynil, dicamba and 2,4-D.

Examples of the crops provided with herbicide tolerance by a classical breeding technique include varieties of rapeseed, wheat, sunflower and rice tolerant to the imidazolinone family of ALS-inhibiting herbicides such as imazethapyr, and such crops are sold under the trade name of Clearfield (registered trademark). Also included is a variety of soybean provided with tolerance to the sulfonyl urea family of ALS-inhibiting herbicides such as thifensulfuron-methyl by a classical breeding technique, and this is sold under the trade name of STS soybean. Further, crops provided with tolerance to acetyl-CoA carboxylase inhibitors such as trione oxime herbicides and aryloxy phenoxy propionic acid herbicides by a classical breeding technique include, for example, SR corn and the like. Other crops provided with tolerance to acetyl-CoA carboxylase inhibitors are described in Proc. Natl. Acad. Sci. USA, 87, 7175-7179 (1990), and the like. Acetyl-CoA carboxylase mutants resistant to acetyl-CoA carboxylase inhibitors are reported in Weed Science, 53, 728-746 (2005), and the like, and by introducing the gene of such an acetyl-CoA carboxylase mutant into crops by a gene recombination technique, or introducing a resistance-conferring mutation into acetyl-CoA carboxylase of crops, crops tolerant to acetyl-CoA carboxylase inhibitors can be engineered. Alternatively, by introducing a nucleic acid causing base substitution mutation into plant cells (a typical example of this technique is chimeraplasty technique (Gura T. 1999. Repairing the Genome's Spelling Mistakes. Science 285: 316-318.)) to allow site-specific substitution mutation in the amino acids encoded by an acetyl-CoA carboxylase gene, an ALS gene or the like of crops, crops tolerant to acetyl-CoA carboxylase inhibitors, ALS inhibitors or the like can be engineered.

Examples of the crops provided with herbicide tolerance by a gene recombination technique include glyphosate-tolerant varieties of corn, soybean, cotton, rapeseed and sugar beet, and such crops are sold under the trade names such as Roundup Ready (registered trademark) and Agrisure GT. Also included are varieties of corn, soybean, cotton and rapeseed genetically engineered to be tolerant to glufosinate, and such crops are sold under the trade name of LibertyLink (registered trademark) etc. Also included is a variety of cotton genetically engineered to be tolerant to bromoxynil, and this is sold under the trade name of BXN.

The crops for which the desiccant and defoliant composition of the present invention can be used also include crops genetically engineered to synthesize toxins such as selective toxins which are known to be produced by the genus *Bacillus.* Exemplary toxins expressed in such genetically modified crops include insecticidal proteins derived from *Bacillus cereus* or *Bacillus popilliae; Bacillus thuringiensis-*derived delta-endotoxins, such as Cry1Ab, Cry1Ac, Cry1F Cry1Fa2, Cry2Ab, Cry3A, Cry3Bb1 and Cry9C, and other insecticidal proteins, such as VIP1, VIP2, VIP3 and VIP3A; nematode-derived insecticidal proteins; toxins produced by animals, such as scorpion toxins, spider toxins, bee toxins and insect-specific neurotoxins; toxins of filamentous fungi; plant lectins; agglutinin; protease inhibitors, such as trypsin inhibitors, serine protease inhibitors, patatin, cystatin and papain inhibitors; ribosome inactivating proteins (RIP), such as ricin, maize RIP, abrin, luffin, saporin and bryodin; steroid metabolizing enzymes, such as 3-hydroxy steroid oxidase, ecdysteroid-UDP-glucosyltransferase and cholesterol oxidase; ecdysone inhibitors; HMG-CoA reductase; ion channel inhibitors, such as sodium channel inhibitors and calcium channel inhibitors; juvenile hormone esterase; diuretic hormone receptors; stilbene synthase; bibenzyl synthase; chitinase; and glucanase. Further, examples of the toxin expressed in genetically modified plants also include hybrid toxins, partially deficient toxins and modified toxins derived from the following: delta-endotoxin proteins such as Cry1Ab, Cry1Ac, Cry1F Cry1Fa2, Cry2Ab, Cry3A, Cry3Bb1, Cry9C, Cry34Ab and Cry35Ab, and other insecticidal proteins such as VIP1, VIP2, VIP3 and VIP3A. The hybrid toxin can be produced by combining domains derived from these proteins differently from the original combination in nature with the use of a recombination technique. As the partially deficient toxin, Cry1Ab, in which a part of the amino acid sequence is deleted, is known. In the modified toxin, one or more amino acids of a naturally occurring toxin are substituted. Examples of the foregoing toxins and genetically modified crops capable of synthesizing these toxins are described in EP-A-0374753, WO 93/07278, WO 95/34656, EP-A-0427529, EP-A-451878, WO 03/052073, etc. Due to the toxins contained in such genetically modified crops, the crops exhibit resistance to pests, in particular, Coleopteran insect pests, Hemipteran insect pests, Dipteran insect pests, Lepidopteran insect pests and nematodes.

Genetically modified crops which contain one or more insecticidal pest-resistance genes and express one or more toxins are already known, and some of them are commercially available. Examples of such genetically modified crops include YieldGard (registered trademark), which is a variety of corn expressing a Cry1Ab toxin; YieldGard Rootworm (registered trademark), which is a variety of corn expressing a Cry3Bb1 toxin; YieldGard Plus (registered trademark), which is a variety of corn expressing Cry1Ab and Cry3Bb1 toxins; Herculex I (registered trademark), which is a variety of corn expressing a Cry1Fa2 toxin and phosphinothricin N-acetyltransferase (PAT) for tolerance to glufosinate; NuCOTN33B (registered trademark), which is a variety of cotton expressing a Cry1Ac toxin; Bollgard I (registered trademark), which is a variety of cotton expressing a Cry1Ac toxin; Bollgard II (registered trademark), which is a variety of cotton expressing Cry1Ac and Cry2Ab toxins; VIPCOT (registered trademark), which is a variety of cotton expressing a VIP toxin; NewLeaf (registered trademark), which is a variety of potato expressing a Cry3A toxin; NatureGard (registered trademark) Agrisure (registered trademark) GT Advantage (a GA21 glyphosate-tolerant trait), Agrisure (registered trademark) CB Advantage (a Bt11 corn borer (CB) trait); and Protecta (registered trademark).

Further, the crops for which the desiccant and defoliant composition of the present invention can be used also include crops provided with a useful trait such as an improved proportion of oil components and a higher amino acid content by a gene recombination technique. Examples of such crops include VISTIVE (registered trademark), which is a variety of soybean engineered to have a reduced linolenic acid content, and high-lysine (high-oil) corn, which is a variety of corn engineered to have an increased content of lysine or oil.

Furthermore, stacked varieties with a combination of two or more selected from the above-described classical herbicide-tolerant traits, herbicide-tolerant genes, insecticidal pest-resistance genes, anti-pathogenic substance-producing genes, and useful traits including an improved proportion of oil components and a higher amino acid content, are also included. The desiccant and defoliant composition of the present invention can be used for such crops as well.

The desiccant and defoliant composition of the present invention has an excellent desiccation and defoliation effect on a wide variety of crops, in particular potato, cotton, sunflower, soybean, rape, sorghum, etc., that is, an excellent effect on desiccation and/or defoliation of the foliage of such crops. The desiccant and defoliant composition of the present invention does not cause phytotoxicity which adversely affects the plant parts to be harvested, such as the underground stem of potato, the seed of soybean, the seed of sunflower and the fiber of cotton.

The desiccant and defoliant composition of the present invention can be used as a herbicide as well. The useful plants for which the composition of the present invention can be used include, but are not particularly limited to, cereals (e.g., rice, barley, wheat, rye, oats, corn, etc.), legumes (e.g., soybeans, azuki beans, broad beans, green peas, kidney beans, peanuts, etc.), fruit trees and fruits (e.g., apples, citrus fruits, pears, grapes, peaches, plums, cherries, walnuts, chestnuts, almonds, bananas, etc.), leaf and fruit vegetables (e.g., cabbages, tomatoes, spinach, broccoli, lettuce, onions, welsh onions, green peppers, eggplants, strawberries, pepper crops, okra, etc.), root vegetables (e.g., carrots, potatoes, sweet potatoes, taros, Japanese radishes, turnips, lotus roots, burdock roots, garlic, etc.), crops for processing (e.g., cotton, hemp, beet, hops, sugarcane, sugar beet, olives, rubber, coffee, tobacco, tea, etc.), gourds (e.g., Japanese pumpkins, cucumbers, watermelons, oriental sweet melons, melons, etc.), pasture grass (e.g., orchardgrass, sorghum, timothy, clover, alfalfa, etc.), lawn grass (e.g., Korean lawn grass, bent grass, etc.), spice and aromatic crops and ornamental crops (e.g., lavender, rosemary, thyme, parsley, pepper, ginger, etc.), flowers and ornamental plants (e.g., chrysanthemums, roses, carnations, orchids, etc.), garden trees (e.g., ginkgo trees, cherry trees, Japanese aucuba, etc.) and forest trees (e.g., *Abies sachalinensis, Picea jezoensis,* pine, yellow cedar, Japanese cedar, hinoki cypress, etc.). Particularly preferred are cereals and legumes.

Examples of the weeds which the desiccant and defoliant composition of the present invention can control include various genera of dicotyledonous weeds, such as *Ipomoea, Lindernia, Sesbania, Abutilon, Matricaria, Rorippa, Urtica, Lamium, Xanthium, Sinapis, Rotala, Veronica*, *Papaver, Chenopodium, Trifolium, Portulaca, Viola, Galeopsis, Datura, Solanum, Capsella, Cirsium, Sonchus, Galinsoga, Stellaria, Senecio, Amaranthus, Ambrosia, Kochia, Lamium, Leipidium, Polygonum, Galium, Centaurea* and *Artemisia.*

Also included are various genera of monocotyledonous weeds, such as *Leptochloa, Phleum, Poa, Festuca, Setaria, Eleusine, Sagittaria, Agropyron, Ischaemum, Cyperus, Avena, Bromus, Panicum, Cynodon, Monochoria, Alopecurus, Paspalum, Commelina, Fimbristylis, Lolium, Brachiaria, Agrostis, Eleocharis, Echinochloa, Scirpus, Digitaria* and *Sorghum.*

Specific examples of the weeds which the desiccant and defoliant composition of the present invention can control include *Amaranthus retroflexus, Amaranthus viridis, Setaria faberi, Leptochloa chinensis, Lindernia angustifolia, Lindernia procumbens, Ipomoea hederacea, Lindernia dubia, Sida spinosa, Polygonum pensylvanicum, Sesbania exaltata, Geranium carolinense, Conyza bonariensis, Amaranthus powellii, Polygonum cuspidatum, Abutilon theophrasti, Matricaria perforata, Polygonum longisetum, Echinochloa crus-galli, Amaranthus lividus, Solanum nigrum, Bromus tectorum, Sagittaria pygmaea* Miq, *Rumex obtusifolius, Setaria viridis, Cassia obtusifolia, Conyza sumatrensis, Veronica persica, Xanthium canadens, Panicum dichotomiflorum, Asclepias syriaca, Euphorbia maculata, Plantago asiatica, Amaranthus palmeri, Xanthium strumarium, Avena sterilis, Eleusine indica, Sagittaria trifolia, Erodium cicutarium, Cerastium glomeratum, Matricaria matricarioides, Matricaria chamomilla, Vicia angustifolia, Bromus secalinus, Avena fatua, Rotala indica, Rumex japonicus, Cyperus esculentus, Setaria glauca, Pueraria lobata, Eleocharis kuroguwai* Ohwi, *Ambrosia trifida,* Chrysanthemum *segetum, Cyperus iria, Monochoria vaginalis, Echinochloa colona, Alisma plantago-aquatica, Oryza sativa, Polygonum lapathifolium, Agropyron repens, Sorghum vulgare, Apera spica-venti, Chenopodium album, Trifolium repens, Datura stramonium, Equisetum arvense, Poa annua, Bromus japonicus, Alopecurus aequalis, Portulaca oleracea, Solidago altissima, Sorghum halepense, Brassica juncea, Taraxacum officinale, Convolvulus arvensis, Oenanthe javanica, Polygonum convolvulus, Echinochloa oryzicola* Vasing, *Ischaemum rugosum, Veronica arvensis, Cyperus difformis* L., *Amaranthus rudis, Ludwigia prostrata* Roxburgh, *Commelina communis, Panicum texanum, Euphorbia helioscopia, Rumex crispus, Capsella bursa-pastoris, Euphorbia pseudochamaesyce, Brachiaria plantaginea, Lolium multiflorum, Alopecurus myosuroides, Sinapis arvensis, Galinsoga ciliata, Stellaria media, Cyperus rotundus, Amaranthus spinosus, Polygonum persicaria, Papaver rhoeas, Helianthus annuus, Lamium purpureum, Kyllinga gracillima, Ammannia multiflora, Conyza canadensis, Potamogeton distinctus* A. Benn, *Amaranthus tuberculatus, Viola arvensis, Ambrosia artemisiifolia, Veronica hederaefolia, Alopecurus myosuroides, Desmodium tortuosum, Plantago lanceolata, Alisma canaliculatum* A. Br. et Bouche, *Kochia scoparia, Lolium rigidum, Ammannia coccinea, Lolium perenne, Scirpus juncoides* Roxburgh, *Lamium amplexicaule, Amaranthus hybridus, Eleocharis acicularis* L., *Ipomoea lacunosa, Ipomoea purpurea, Ipomoea hederacea* var *integriuscula, Commelina bengharensis, Monochoria korsakowii, Cyperus serotinus, Elatine triandra, Digitaria ciliaris, Digitaria sanguinalis, Sorghum bicolor, Galium aparine, Artemisia princeps, Viola tricolor, Raphanus raphanistrum* and *Myosotis arvensis.*

In the case where the desiccant and defoliant composition of the present invention is used as a herbicide, the total content, the application amount, the blending ratio, the formulation method, etc. of the active ingredient compounds are appropriately selected from the respective ranges as disclosed regarding the desiccant and defoliant composition.

In the case where the desiccant and defoliant composition of the present invention is used as a herbicide, the composition exerts an excellent herbicidal effect on weeds at the pre- or post-emergence stage. Therefore, for effective exertion of the herbicidal activity, the composition is applied to plots to be planted with useful plants before planting, or to plots planted with useful plants (including plots where useful plants are planted and settled like land under perennial crops) at some time during the period from the early post-emergence stage to the growing stage of weeds. However, the composition of the present invention is not intended for use in such embodiments only, and can also be used as a herbicide for common weeds, that is, common weeds in, for example, post-harvest land, fallow fields, ridges, farm roads, water channels, developed pasture land, cemeteries, parks, roads, playgrounds, clear spaces surrounding buildings, reclaimed land, sides of railway tracks, forests, etc. In this case, treatment before the early post-emergence stage of weeds is the most economically effective, but the time of treatment is not limited thereto, and it is also possible to control weeds at the growing stage.

### EXAMPLES

Hereinafter, representative Examples and Test Examples in connection with the present invention are shown, but the present invention is not limited thereto. In Examples, the "part(s)" means a part(s) by mass.

### Example 1: emulsifiable concentrate

| | |
|---|---|
| Pyraflufen-ethyl | 1.0 part |
| Carfentrazone | 3.2 parts |
| Xylene | 75.8 parts |
| N-methyl pyrrolidone | 10 parts |
| Mixture of polyoxyethylene nonylphenyl ether and calcium alkylbenzene sulfonate | 10 parts |

The above ingredients were mixed and dissolved uniformly to give an emulsifiable concentrate.

### Example 2: dust

| | |
|---|---|
| Pyraflufen-ethyl | 1.0 part |
| Carfentrazone | 3.2 parts |
| Clay powder | 80.8 parts |
| Diatomite powder | 15 parts |

The above ingredients were uniformly mixed and then pulverized to give a dust.

### Example 3: granule

| | |
|---|---|
| Pyraflufen-ethyl | 1.0 part |
| Carfentrazone | 3.2 parts |
| Mixture of bentonite powder and clay powder | 90.8 parts |
| Calcium lignosulfonate | 5 parts |

The above ingredients were uniformly mixed. After addition of an appropriate volume of water, the mixture was kneaded, granulated and dried to give a granule.

### Example 4: wettable powder

| | |
|---|---|
| Pyraflufen-ethyl | 1.0 part |
| Carfentrazone | 3.2 parts |
| Kaolin and synthetic high-dispersion silicic acid | 90.8 parts |
| Mixture of polyoxyethylene nonylphenyl ether and calcium alkylbenzene sulfonate | 5 parts |

The above ingredients were uniformly mixed and then pulverized to give a wettable powder.

### Example 5: suspension concentrate (flowable)

| | |
|---|---|
| Pyraflufen-ethyl | 1.0 part |
| Carfentrazone | 3.2 parts |
| Runox 1000C (manufactured by Toho Chemical Industry Co., Ltd. Japan) | 5 parts |
| Carplex #80D (manufactured by Shionogi & Co., Ltd.) | 3 parts |
| Ethylene glycol | 8 parts |
| Water | 59.8 parts |

The above ingredients were mixed into a dispersion. This slurry mixture was wet ground by Dyno-Mill (manufactured by WAB), 20 parts of a 1% aqueous xanthan gum solution, which was prepared in advance by dissolving xanthan gum in water with mixing, was added, and the mixture was uniformly mixed to give a suspension concentrate (flowable).

### Test Example 1

In 5100-ml plastic pots filled up with soil (clay loam), seed potatoes (variety: danshaku) were planted and cultivated in a greenhouse. When the foliage was fully developed, specifically, at 30 days after flowering, the test plants were treated with the predetermined effective dosage (expressed as the amounts of active ingredients in g/ha) of the composition of the present invention in a liquid form, and further cultivated in the greenhouse. In the period from 4 days to 16 days after the treatment, the desiccation effect was surveyed and the herbicidal effect was evaluated according to the criterion described below. The results are shown in Table 1.

Regarding the criterion for evaluating the desiccation and defoliation effect, the extent of desiccation and defoliation was graded from 0% (no effect) to 100% (completely desiccated).

**Table 1**

| Test agrochemical | Dosage (g.a.i./ha) | 4DAT | 7DAT | 10DAT | 16DAT |
|---|---|---|---|---|---|
| Pyraflufen-ethyl | 10 | 38 | 42 | 45 | 58 |
| | 20 | 48 | 50 | 55 | 68 |
| Carfentrazone | 32 | 18 | 22 | 33 | 40 |
| | 64 | 45 | 52 | 58 | 70 |
| Pyraflufen-ethyl + Carfentrazone | 5+16 | 65 | 78 | 82 | 90 |
| | 10+32^{A)} | 72 | 80 | 92 | 92 |
| Expected value (E) as calculated by Colby's equation in the condition of A) | - | 49 | 55 | 63 | 75 |

| | | | | | |
|---|---|---|---|---|---|
| *: Expected value (E) = (X + Y) - (X x Y)/100 | | | | | |

In the formula, X indicates the desiccation and defoliation effect (%) of pyraflufen-ethyl, Y indicates the desiccation and defoliation effect (%) of carfentrazone, and E indicates the expected desiccation and defoliation effect (%) of the combination of the two active ingredients.

As is clear from these results, the foliage desiccation effect of the desiccant and defoliant composition of the present invention was higher than those of its constituent agrochemicals separately used and also exceeded the expected value calculated by Colby's equation, and thus a synergistic effect was produced.

### INDUSTRIAL APPLICABILITY

The desiccant and defoliant composition of the present invention uses a combination of two or more kinds of compounds selected from protoporphyrinogen oxidase-inhibiting herbicides and thereby can efficiently wither the aboveground parts of crops.

## Claims

1. A desiccant and defoliant composition comprising two or more different kinds selected from the group consisting of protoporphyrinogen oxidase-inhibiting herbicides as active ingredients.

2. The desiccant and defoliant composition according to claim 1, at least comprising pyraflufen-ethyl or an agriculturally acceptable salt or ester thereof as a first active ingredient; and one or more kinds of compounds selected from the group consisting of carfentrazone, sulfentrazone, flumioxazin, fomesafen, acifluorfen, oxyfluorfen, fluthiacet-methyl, butafenacil, saflufenacil and agriculturally acceptable salts or esters thereof as a second active ingredient.

3. The desiccant and defoliant composition according to claim 1, at least comprising carfentrazone or an agriculturally acceptable salt or ester thereof as a first active ingredient; and one or more kinds of compounds selected from the group consisting of sulfentrazone, flumioxazin, fomesafen, acifluorfen, oxyfluorfen, fluthiacet-methyl, butafenacil, saflufenacil and agriculturally acceptable salts or esters thereof as a second active ingredient.

4. The desiccant and defoliant composition according to claim 1, at least comprising sulfentrazone or an agriculturally acceptable salt or ester thereof as a first active ingredient; and one or more kinds of compounds selected from the group consisting of flumioxazin, fomesafen, acifluorfen, oxyfluorfen, fluthiacet-methyl, butafenacil, saflufenacil and agriculturally acceptable salts or esters thereof as a second active ingredient.

5. The desiccant and defoliant composition according to claim 1 or 2, comprising pyraflufen-ethyl and carfentrazone as active ingredients.

6. A method for using the desiccant and defoliant composition according to any one of claims 1 to 5 for desiccation and/or defoliation of crop foliage.

7. A method for using the desiccant and defoliant composition according to any one of claims 1 to 5, comprising applying the composition to potato, sunflower, soybean, rape, sorghum or cotton.

8. A method for using the composition according to any one of claims 1 to 5 as a herbicide.

9. The method according to claim 8, wherein the composition is applied to cereals.
